Europäisches Patentamt

European Patent Office

Office européen des brevets

(11) Veröffentlichungsnummer : **0 075 143**
**B1**

# EUROPÄISCHE PATENTSCHRIFT

(45) Veröffentlichungstag der Patentschrift :
03.04.85

(21) Anmeldenummer : 82107980.3

(22) Anmeldetag : 31.08.82

(51) Int. Cl.⁴ : **E 04 F 15/024, F 24 D 3/00**

(54) **Doppelboden.**

(30) Priorität : 19.09.81 DE 3137410

(43) Veröffentlichungstag der Anmeldung :
30.03.83 Patentblatt 83/13

(45) Bekanntmachung des Hinweises auf die Patenterteilung : 03.04.85 Patentblatt 85/14

(84) Benannte Vertragsstaaten :
**AT BE CH DE FR GB IT LI NL SE**

(56) Entgegenhaltungen :
**DE-A- 2 616 007**
**DE-A- 3 026 416**
**DE-U- 7 317 697**
**DE-U- 7 804 148**
**DE-U- 8 001 291**

(73) Patentinhaber : **MERO-WERKE Dr.-Ing. Max Menge-**
**ringhausen GmbH & Co.**
**Steinachstrasse 5**
**D-8700 Würzburg (DE)**

(72) Erfinder : **Radtke, Manfred**
**Sandflurweg 63**
**D-8702 Margetshöchheim (DE)**

Jouve, 18, rue St-Denis, 75001 Paris, France

**Beschreibung**

Die Erfindung bezieht sich auf einen Doppelboden mit aufgeständerten Bodenplatten aus wärmeleitfähigen und/oder wärmespeichernden Werkstoffen, insbesondere Bodenplatten aus einem mineralischen Werkstoff, z. B. Anhydrit in einer wannenförmigen äußeren Bewehrung aus Metall.

Doppelböden werden vor allem deshalb vorgesehen, um einen Hohlraum unterhalb der Bodenplatten für die Verlegung von Installationsleitungen verschiedenster Art und elektrischen Kabeln zu erhalten. Der Doppelboden-Hohlraum wird auch für die Zuführung konditionierter bzw. erwärmter Luft für die Zwecke der Raumklimatisierung und -Beheizung genutzt. Weitere Eigenschaften der bekannten Doppelböden bestehen darin, daß sie einfach und schnell montiert und demontiert werden können und der Hohlraum unterhalb der Bodenplatten zugänglich bleibt.

Es ist ein Doppelboden gemäß dem Oberbegriff des Patentanspruches 1 bekannt (Deutsches Gebrauchsmuster Nr. 78 04 148), bei dem die Zuführung entsprechend konditionierter bzw. erwärmter Luft im Hohlraum unterhalb der Bodenplatten zwar möglich, jedoch aus unterschiedlichen Gründen nicht immer durchführbar und vorteilhaft ist. So können zum Beispiel an den Lufteintrittsstellen in dem zu beheizenden Raum unerwünschte Zuglufterscheinungen auftreten. Ferner müssen an den Lufteinlässen in den Bodenplatten Vorkehrungen getroffen werden, um eine Verschmutzung derselben zu vermeiden.

Der Erfindung liegt die Aufgabe zugrunde, einen Doppelboden mit direkt, d. h. durch Wärmeleitung beheiz- oder kühlbaren Bodenplatten zu schaffen, der alle Vorteile der bekannten Doppelböden beibehält.

Diese Aufgabe wird durch die im Anspruch 1 gekennzeichnete Erfindung gelöst. Vorteilhafte Weiterbildungen sind in den Ansprüchen 2 und 3 enthalten. Die durch die Erfindung erzielten Vorteile sind folgende :

Der Wärmeübergang erfolgt von den Rohrleitungen auf die Bodenplatten in der Art einer Fußbodenheizung, wobei der Wämefluß in den Bodenplatten sowohl in Querrichtung als auch in vertikaler Richtung stattfindet und die so erwärmten Bodenplatten die Raumbeheizung bewirken, bzw. im Falle der Verwendung eines Kühlmediums in dem Rohrleitungs-System eine Raumkühlung. Je nach Ausgestaltung der Bodenplatten kann dabei zugleich ein mehr oder weniger starker Wärmespeichereffekt erzielt werden. Im Gegensatz zu herkömmlichen Fußbodenheizungen sind die medienführenden Rohrleitungen im Stör- oder Schadensfall schnell und einfach zugänglich, da man zu diesem Zweck lediglich die aufgeständerten Bodenplatten von ihren Stützen abzuheben braucht. Die Belastungen des Doppelbodens können über die einzelnen Bodenplatten und deren Stützen auf den Gebäudeboden abgetragen werden und sind somit ohne jeglichen Einfluß auf das System von medienführenden Rohrleitungen. Man vermeidet dadurch die bei herkömmlichen Fußbodenheizungen bekannten Setzungserscheinungen mit unkontrollierbaren Folgeschäden für das System von medienführenden Rohrleitungen. Die Wärmeisolierung des Systems von Rohrleitungen nach unten kann ferner in einer einfachen preiswerten Ausführung erfolgen, da von ihr keine Belastungen aufgenommen werden müssen. Im Bedarfsfall können nachträgliche Veränderungen am Rohrleitungs-System ohne weiteres durchgeführt werden. Die bekannten Vorteile eines Doppelbodens bleiben erhalten, nämlich Ausbildung eines Hohlraums unterhalb der Bodenplatten für die Verlegung elektrischer Kabel bzw. Installationsleitungen verschiedenster Art sowie eine schnelle und einfache Montage und Demontage des gesamten Doppelbodens. Dabei verhindert die in einem solchen Hohlraum auftretende Luftzirkulation eine schädliche Schwitzwasserausbildung. Im Gegensatz zu bekannten Fußbodenheizungen in Estrich-Einbettung kann ferner der horizontale Wärmefluß verhältnismäßig einfach zum Beispiel im Randbereich des Doppelbodens abgegrenzt werden, so daß keine Wärmeverluste wie beim Stand der Technik auftreten. Eine Wärmeisolierung für das Rohrleitungs-System nach unten bringt zusätzlich noch eine verbesserte Schalldämmung des Doppelbodens. Als Bodenplatten können die verschiedensten Ausführungen verwendet werden, soweit sie aus Materialien mit einer für die vorliegenden Zwecke ausreichenden Wärmeleitfähigkeit und/oder Wärmespeichereigenschaft bestehen. Eine bevorzugte Bodenplatte für die erfindungsgemäßen Zwecke enthält einen wärmespeichernden mineralischen Werkstoff, z. B. Anhydrit in einer gut wärmeleitfähigen wannenförmigen äußeren Bewehrung z. B. aus verzinktem Stahlblech. Als Gehbeläge für die Bodenplatten können praktisch alle bisher verwendeten Materialien, einschließlich Keramik und Steinfliesen vorgesehen werden.

Der Wärmeübergang von den Rohrleitungen auf die Bodenplatten ist dadurch begünstigt, daß die Rohrleitungen in flächiger Berührung mit den Bodenplatten gehalten sind. Zu diesem Zweck können die Rohrleitungen von der Fertigung her oben abgeflacht sein oder durch das Gewicht der Bodenplatten abgeflacht werden, was die Verwendung von Rohrleitungen aus einem entsprechend deformierbaren Kunststoff voraussetzt. Diese den Wärmeübergang verbessernden Maßnahmen sind zwar bei herkömmichen Fußbodenheizungen bekannt, der Grad der Deformierung des Rohrleitungsquerschnitts ist dort jedoch nicht genau bestimmbar.

Dadurch, daß das System von Rohrleitungen durch die Stützen des Doppelbodens getragen wird, auf welchen auch die Bodenplatten aufgelagert sind, werden eine bauliche Vereinfachung sowie eine Montageerleichterung erzielt und zugleich wird vorteilhaft der Hohlraum unterhalb des Doppelbodens von den sonst erforderlichen zusätzlichen Abstützelementen für das Rohrleitungs-System freigehalten.

Dadurch, daß die Rohrleitungen durch an den Stützen aufgelagerten Trag- und Fixierelementen gegen die Bodenplatten gehalten sind, die mit Aufnahmenuten für die Rohrleitungen versehen und von ihren Auflagerstellen weg gegen die Unterseiten der Bodenplatten ansteigend oder gekrümmt ausgebildet sind und aus einem elastisch nachgiebigen Werkstoff bestehen und daß die Trag- und Fixierelemente für die Rohrleitungen auf höhenverstellbaren Platten an den Stützen aufgelagert sind, kann auf einfache Weise der Grad der Abflachung der Rohrleitungen durch das Gewicht der Bodenplatten eingestellt werden.

Zweckmäßig sind die Trag- und Fixierelemente für die Rohrleitungen durch plattenförmige Formteile aus einem wärmedämmenden Werkstoff gebildet. Diese Formteile sind preiswert herzustellen und reduzieren Wärmeverluste nach unten.

Der Wärmefluß in Richtung Bodenplatten wird weiter verbessert bzw. Wärmeverluste nach unten werden noch stärker reduziert, wenn die Oberseiten der plattenförmigen Trag- und Fixierelemente mit einer Wärmestrahlen reflektierenden Schicht, Folie oder dgl. versehen sind.

Die Erfindung wird anschließend anhand der Zeichnungen eines Ausführungsbeispiels erläutert. Es zeigen:

Figur 1 eine schematische Draufsicht auf einen Teil eines Doppelbodens, teilweise ohne Bodenplatten, um das darunterliegende System von Rohrleitungen und die plattenförmigen Formteile zu zeigen, wobei die Rohrleitungen lediglich durch strichpunktierte Linien angedeutet sind;

Figur 2 eine Schnittansicht entlang der Linie II-II in Figur 1 in vergrößertem Maßstab;

Figuren 3-5 verschiedene Ansichten plattenförmiger Formteile, die als Trag- und Fixierelemente für die Rohrleitungen beim Doppelboden nach den Figuren 1 und 2 verwendet werden;

Der aufgeständerte Doppelboden 10 des Ausführungsbeispiels weist tragende Bodenplatten 11 auf, die mit ihren Ecken auf Stützen 12 aufgelagert sind, welche ihrerseits auf einem Rohboden 13 eines Gebäudes aufgestellt und fixiert sind. Die Stützen 12 enthalten jeweils eine zentrisch an einer Fußplatte 14 befestigte Gewindestange 15, auf die eine Tragplatte 16 aufgeschraubt ist, auf welcher die Bodenplatten 11 mit ihren Ecken aufgelagert sind. Die Tragplatten 16 sind somit höhenverstellbar, um eine Nivellierung der Bodenplatten 11 zu ermöglichen.

Die Bodenplatten 11 bestehen im wesentlichen aus einer Anhydrit-Füllung in einer äußeren wannenförmigen Bewehrung 17 aus Metall, z. B. verzinktem Stahlblech und einem Gehbelag 18 aus z. B. keramischem Material, Kunst- oder Naturstein oder auch Kunststoff, einschließlich Teppichböden.

Auf den Gewindestangen 15 der Stützen 12 sind weitere Platten 19 aufgeschraubt, die folglich auch höhenverstellbar sind. Auf diesen Platten 19 sind mit ihren Ecken als plattenförmige Formteile ausgebildete Trag- und Fixierelemente 21 bzw. 21' für ein System von Rohrleitungen 20 aufgelagert. Diese Rohrleitungen 20 bestehen z. B. aus einem unter äußeren Druck deformierbaren Kunststoff und führen ein Heiz- oder Kühlmedium zur Raumheizung bzw. Raumkühlung. Zur Vereinfachung der Beschreibung wird im folgenden nur von ein Heizmedium führenden Rohrleitungen 20 gesprochen.

Bei den als Formteile ausgebildeten Trag- und Fixierelementen 21 bzw. 21' handelt es sich um solche aus geschäumtem oder gepreßten Kunststoff. Diese plattenförmigen Trag- und Fixierelemente 21, 21' für die Rohrleitungen 20 sind an ihren Ecken mit bogenförmigen Aussparungen 22 versehen, wodurch bei fertig verlegten Trag- und Fixierelementen 21 bzw. 21' jeweils von vier solchen Aussparungen 22 ein Hohlraum zur passenden Aufnahme einer Stütze 12 begrenzt ist. Die plattenförmigen Trag- und Fixierelemente 21, 21' werden auf Stoß verlegt, d. h. daß sie sich randseitig berühren. An ihren Oberseiten sind die plattenförmigen Trag- und Fixierelemente 21 bzw. 21' mit Aufnahme-Nuten 23 für die Rohrleitungen 20 versehen, deren Form dem jeweiligen Verlegemuster der Rohrleitungen 20 entspricht. In diese Aufnahme-Nuten werden die Rohrleitungen 20 eingelegt, bevor die Bodenplatten 11 auf den Tragplatten 16 aufgelagert werden.

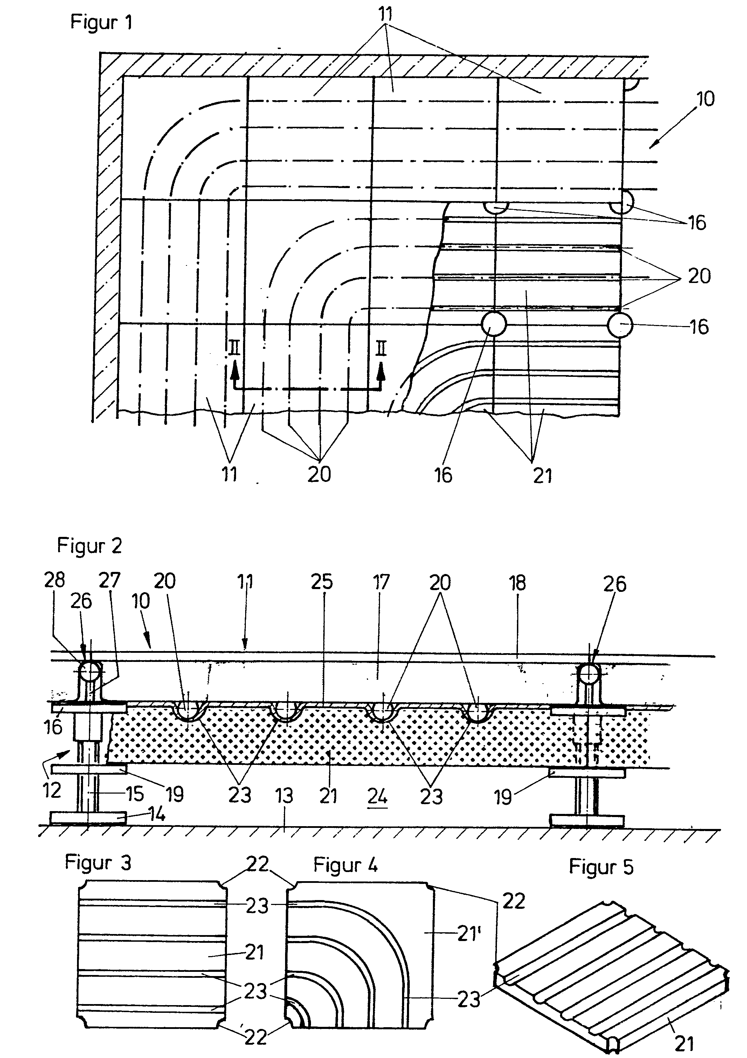

Wie aus Figur 2 hervorgeht, ist der Radius dieser Aufnahme-Nuten 23 etwas größer als der Außenradius der Rohrleitungen 20 und ihre Tiefe ist in jedem Fall merklich kleiner als der Außendurchmesser der Rohrleitungen 20, sodaß letztere noch zu einem erheblichen Teil über die Oberseiten der plattenförmigen Trag- und Fixierelemente 21, 21' hervorstehen.

Bei der Montage des Doppelbodens 10 wird durch entsprechende Höheneinstellung der Platten 19 der Abstand zwischen den plattenförmigen Trag- und Fixierelementen 21, 21' und den Bodenplatten 11 unter Berücksichtigung des Außen-Durchmessers der Rohrleitungen 20 so eingestellt, daß bei der Auflagerung der Bodenplatten 11 auf den Tragplatten 16 der Stützen 12 die Rohrleitungen 20 unter dem Gewicht der Bodenplatten 11 etwas zusammengedrückt und abgeflacht werden, wobei sie in eine flächige wärmeleitende Berührung mit den Unterseiten der Bodenplatten 11 gelangen, das heißt also mit den Unterseiten der wannenförmigen Bewehrungen 17 aus verzinktem Stahlblech dieser Bodenplatten 11. Dadurch wird der Wärmeübergang von den Rohrleitungen 20 auf die wannenförmigen Bewehrungen 17 verbessert, die für den Wärmefluß in horizontaler und vertikaler Richtung sorgen. Die Anhydrit-Füllung jeder Bodenplatte 11 bildet dabei in erwünschter Weise einen Wärmespeicher. Die aus geschäumtem oder gepreßten Kunststoff bestehenden plattenförmigen Trag- und Fixierelemente 21, 21' bilden nach unten in Richtung des Doppelboden-Holraums 24 eine Wärmedämmung. Der Wärmefluß in Richtung Bodenplatten 11 wird noch dadurch verbessert, daß die Oberseiten der plattenförmigen Trag- und Fixierelemente 21, 21' mit einer Wärmestrahlen reflektierenden Folie 25, z. B. Aluminiumfolie, überzogen sind. Die auf diese Weise durch die Rohrleitungen 20 erwärmten Bodenplatten 11 geben ihrerseits die Wärme nach oben zur Raumbeheizung ab. In dem Doppelboden-Hohlraum 24 können beliebige Installationsleitungen und elektrische Kabel verlegt werden (nicht gezeigt).

Von Bedeutung ist, daß die plattenförmigen Trag- und Fixierelemente 21, 21' so beschaffen sind, daß eine dauerhafte wärmeleitende Berührung zwischen den Rohrleitungen 20 und den Unterseiten der Bodenplatten 11 sichergestellt ist. Zu diesem Zweck ist es vorteilhaft, wenn die plattenförmigen Trag- und Fixierelemente aus einem federnden Kunststoff hergestellt sind und/oder von ihren Auflagerstellen weg eine gegen die Bodenplatten-Unterseiten ansteigende Oberseite aufweisen, etwa in der Form eines Pyramidenstumpfes. Dadurch können sie durch das Gewicht der Bodenplatten 11 nach unten vorgespannt werden, so daß die Rohrleitungen 20 durch die Rückstellkraft der plattenförmigen Trag- und Fixierelemente 21 sicher in wärmeleitender flächiger Berührung mit den Unterseiten der Bodenplatten 11 gehalten werden.

Die Bodenplatten 11 sind gegen aufsteigende Warmluft an ihren Rändern gegenseitig abgedichtet. Zu diesem Zweck ist ein Dichtungsprofil 26 vorgesehen, das jeweils aus einer steifen tragenden Leiste 27 und einem elastischen schlauchartigen Teil 28 besteht, der an der Leiste 27 befestigt, z. B. angeformt ist. Die Dichtungsprofile 26 sind mit ihren Leisten 27 auf den Tragplatten 16 der einzelnen Stützen 12 aufgelagert. Der schlauchartige Teil 28 hat im belastungsfreien Zustand etwa eine längliche ovale Form und wird bei der Montage der Bodenplatten 11 durch deren Gewicht so deformiert, daß er sich abdichtend gegen die Ränder der Bodenplatten 11 legt, wie in Fig. 2 angedeutet ist.

## Ansprüche

1. Doppelboden (10) mit aufgeständerten Bodenplatten (11) aus wärmeleitfähigen und/oder wärmespeichernden Werkstoffen, insbesondere Bodenplatten aus einem mineralischen Werkstoff, z. B. Anhydrit in einer wannenförmigen äußeren Bewehrung (17) aus Metall, dadurch gekennzeichnet, daß

a) ein System von ein Heiz- oder Kühlmedium führenden Rohrleitungen (20) in wärmeleitender Berührung mit den Unterseiten der aufgeständerten Bodenplatten (11) gehalten ist ;

b) die Rohrleitungen (20) in flächiger Berührung mit den Bodenplatten (11) gehalten sind ;

c) das System von Rohrleitungen (20) durch die Stützen (12) des Doppelbodens (10) getragen wird, auf welchen auch die Bodenplatten (11) aufgelagert sind ;

d) die Rohrleitungen (20) durch an den Stützen (12) aufgelagerten Trag- und Fixierelementen (21) gegen die Bodenplatten (11) gehalten sind, die mit Aufnahme-Nuten (23) für die Rohrleitungen (20) versehen und von ihren Auflagerstellen weg gegen die Unterseiten der Bodenplatten (11) ansteigend oder gekrümmt ausgebildet sind und aus einem elastisch nachgiebigem Werkstoff bestehen und

e) die Trag- und Fixierelemente (21) für die Rohrleitungen (20) auf höhenverstellbaren Platten (19) an den Stützen (12) aufgelagert sind.

2. Doppelboden nach Anspruch 1, dadurch gekennzeichnet, daß die Trag- und Fixierelemente (21) für die Rohrleitungen (20) durch plattenförmige Formteile aus einem wärmedämmenden Werkstoff gebildet sind.

3. Doppelboden nach Anspruch 2, dadurch gekennzeichnet, daß die Oberseiten der plattenförmigen Trag- und Fixierelemente (21) mit einer Wärmestrahlen reflektierenden Schicht, Folie (25) oder dgl. versehen sind.

## Claims

1. Double bottom (10) with rack-type mounted bottom plates (11) of thermally conductive and/or heat accumulating materials, particularly bottom plates of a mineral material, e. g. anhydrite in a trough-shaped external reinforcement (17) of metal, characterized in that

a) a system of heating or cooling medium carrying pipelines (20) is held in a thermally conductive contact with the lower sides of the ach-type mounted bottom plates (11)

b) the pipelines (20) are held in surface contact with the bottom plates (11) ;

c) the system of pipelines (20) is carried by the props (12) of the double bottom (10) on which there are also supported the bottom plates (11) ;

d) the pipelines (20), via carrying and fastening elements (21) supported on the props (12), are held in position against the bottom plates (11) which are provided with locating or receiving grooves (23) for the pipelines (20) and which, directed away from the supporting points, are formed in an ascending and/or curved manner towards the lower sides of the bottom plates (11) and consist of a resilient or flexibly yielding material ; and in that

e) the carrying and fastening elements (21) for the pipelines (20) are supported on height-adjustable plates (19) at the props (12).

2. Double bottom according to claim 1 characterized in that the fastening and fixing elements (21) for the pipelines (20) are formed by plate-shaped moulded parts of a heat insulating material.

3. Double bottom according to claim 2 characterized in that the upper sides of the plate-shaped carrying and fastening elements (21) are provided with a heat radiation reflecting layer, coating, foil (25) or the like.

**Revendications**

1. Double-fond (10) avec des plaques de fond (11) reposant sur des supports, et qui consistent en matériaux accumulateurs de chaleur, surtout des plaques de fond en un matériau minéral, p. ex. anhydrite dans une armature métallique extérieure (17) en forme d'une cuve, caractérisé en ce

a) qu'un système de tuyauteries (20) contenant un fluide chauffant ou refroidissant est maintenu en contact conducteur de chaleur avec les faces inférieures des plaques de fond (11), reposant sur des supports ;

b) que les tuyauteries (20) sont maintenues en contact plan avec les plaques de fond (11) ;

c) que le système de tuyauteries (20) est soutenu par les supports (12) du double-fond (10), sur lesquels s'appuient également les plaques de fond (11) ;

d) que les tuyauteries (20) sont maintenues contre les plaques de fond (11) par des éléments de support et de fixation (22) qui sont munis d'encoches de positionnement (23) pour les tuyauteries (20) et qui à partir de leurs points d'appui sont formés ascendants ou courbés et qui consistent en un matériau élastique déformable et

e) que les éléments de support et de fixation (21) pour les tuyauteries (20) reposent sur les supports (12) par l'intermédiaire de plaques (19) réglables en hauteur.

2. Double-fond selon revendication 1, caractérisé en ce que les éléments de support et de fixation (21) pour les tuyauteries (20) sont constitués par des pièces préformées en forme de plaques, constituant en un matériau calorifuge.

3. Double-fond selon revendication 2, caractérisé en ce que les faces supérieures des éléments de support et de fixation en forme de plaques (21) sont munies d'une couche réfléchissant les rayonnements thermiques, film (25) ou similaire.

0 075 143

Figur 1

Figur 2

Figur 3

Figur 4

Figur 5